# EUROPEAN PATENT SPECIFICATION

(11) **EP 0 422 612 B1**
(45) Date of publication and mention of the grant of the patent: **18.05.1994**
(21) Application number: 90119417.5
(22) Date of filing: 10.10.1990
(51) Int. Cl.: B23K 1/18

(54) **Method of brazing metal members**
Verfahren zum Hartlöten von Metallteilen
Méthode de brasage de parties métalliques

(30) Priority: 11.10.1989 JP 264338/89
(43) Date of publication of application: 17.04.1991
(73) Proprietor: SHOWA ALUMINUM CORPORATION, Sakai-shi Osaka (JP)
(72) Inventor: Koga, Naoyuki, Oyama-shi, Tochigi (JP); Sukimoto, Minobu, Oyama-shi, Tochigi (JP); Shiroyama, Michio, Oyama-shi, Tochigi (JP); Akiyoshi, Hitoshi, Oyama-shi, Tochigi (JP)
(74) Representative: TER MEER STEINMEISTER & PARTNER GbR

(56) References cited:
- FR-A- 2 270 047
- US-A- 3 604 104

## Description

The present invention relates to a method of brazing a first metal member at an end portion thereof having a predetermined length to a second metal member, with the end portion of the first metal member inserted into an outwardly flaring bore of the second metal member, the first metal member being in a position between a horizontal position and a position inclined at an angle of less than 45 degrees with a horizontal plane.

A method of this kind is disclosed by the US-A-3 604 104 which refers to a method of producing aluminum brazed coil. In accordance with this method, hairpin coil tubes and coil fins are assembled with headers, return bends and inlet and outlet tubes. The ends of the hairpin tubes are expanded or flared to receive the return tube portions with a predetermined clearance, and the tubes are loaded with a solder ring at the expanded ends thereof.

The term "aluminum" as used herein and in the claims includes pure aluminum and aluminum alloys. The term "bore" as used herein and in the claims includes both through bore and blind bore. The term "wrought aluminum" as used herein and in the claims refers to an article of aluminum prepared by extrusion, impact extrusion, forging or like plastic working process.

### PRIOR ART

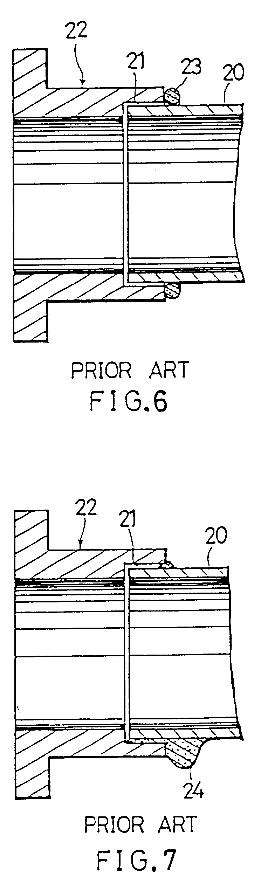

For example, a metal pipe 20 having a circular cross section is joined at a horizontal end portion of predetermined length to a tubular metal member 22 having a straight circular bore 21 for receiving the pipe end portion therein by preplaced brazing usually in the manner shown in FIG. 6, i.e., by inserting the end portion of the metal pipe 20 into the bore 21 of the metal member 22, and fitting an annular brazing material 23 of wire around the end portion of the pipe 20 outside the bore 21 but adjacent to the metal member 22.

However, when the brazing material 23 is melted, a portion of the molten brazing material corresponding to the portion of the joint to be formed over a circumferential length including the uppermost part of the joint flows down under gravity, with the result that the molten brazing material encounters difficulty in penetrating into the upper portion of the clearance between the inner peripheral surface of the metal member 22 defining the bore 21 and the outer peripheral surface of the pipe portion inserted in the bore 21 as seen in FIG. 7. Accordingly, the fillet 24 formed at the joint between the metal pipe 20 and the metal member 22 has a diminished upper portion, failing to afford a sufficient joint strength.

### SUMMARY OF THE INVENTION

The main object of the present invention is to provide a method of brazing metal members free of the foregoing problem.

To comply with this object, the method according to the invention is characterized in that the bore of the second metal member has a straight portion, the flaring portion extending from the axially outer end of the straight portion, the two metal members being joined together by brazing with the end portion of the first metal member inserted into the bore straight portion of the second metal member through the flaring portion, the bore of the second metal member having a brazing material placing portion extending from the axially outer end of the flaring portion and being not smaller than the largest part of the flaring portion, and the brazing material being disposed in the placing portion.

When the brazing material is melted for brazing according to the method of the invention, the molten brazing material flows axially inward as if it is drawn into the space between the inner peripheral surface of the second member defining the bore tapered portion and the outer peripheral surface part of the first member end portion positioned within the tapered portion, and further flows into and is retained in the clearance between the inner peripheral surface of the second member defining the bore straight portion and the outer peripheral surface part of the first member end portion positioned in the straight portion, whereby the molten brazing material is prevented from flowing down. This precludes the formation of a diminished upper fillet portion at the joint between the two metal members, giving high strength to the joint.

With the above method, the bore of the second metal member preferably has a brazing material placing portion extending from the axially outer end of the tapered portion and not smaller than the largest part of the tapered portion to braze the metal members to each other with the brazing material disposed in the placing portion.

The present invention will be described in greater detail with reference to the accompanying drawings.

### BRIEF DESCRIPTION OF THE DRAWINGS

FIG. 1 is a fragmentary view in vertical section illustrating the method of the invention practiced as a first embodiment for brazing a tubular plenum chamber to a throttle body mount to fabricate an intake manifold;
FIG. 2 is a fragmentary enlarged view of FIG. 1;
FIG. 3 is a fragmentary view in vertical section showing the brazed joint formed between the tubular plenum chamber of the intake manifold and the throttle body mount thereof by the method of the present invention;
FIG. 4 is a perspective view of the intake manifold including the tubular plenum chamber and the throttle body mount joined thereto by the brazing method of the invention;
FIG. 5 is a view corresponding to FIG. 2 and illustrating the method of the invention practiced as a second embodiment for brazing a tubular plenum chamber to a throttle body mount to fabricate an intake manifold;
FIG. 6 is a fragmentary view in vertical section illustrating a conventional brazing method before a joint is formed; and
FIG. 7 is a sectional view showing two metal members joined together by the conventional brazing method.

### DESCRIPTION OF THE PREFERRED EMBODIMENTS

Throughout the drawings, like parts are designated by like reference numerals and will not be described repeatedly.

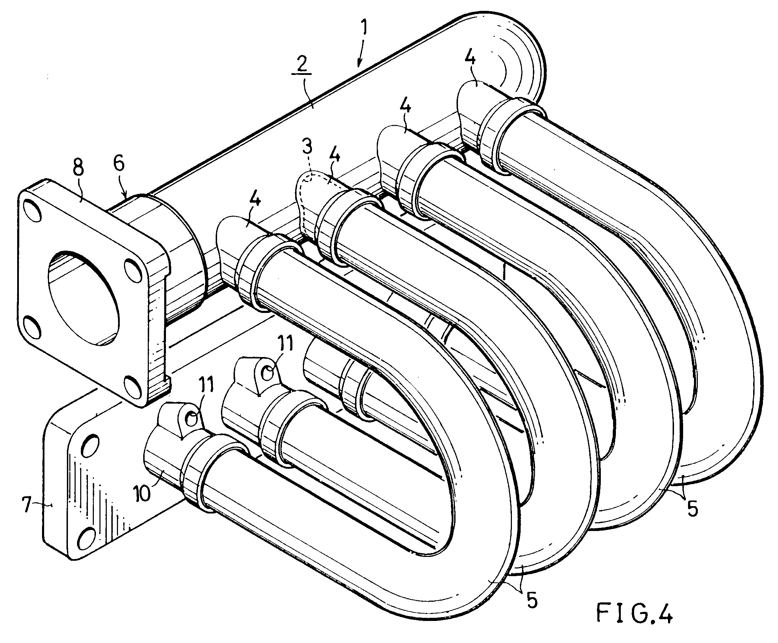

FIG. 4 shows a motor vehicle intake manifold fabricated by the method of the present invention. The intake manifold 1 comprises a main pipe 2 of wrought aluminum having a circular cross section and serving as a tubular plenum chamber, and a plurality of branch pipes 5 of wrought aluminum having a circular cross section. The main pipe 2 is open at one end, closed at the other end, has a plurality of holes 3 in its peripheral wall and is integrally formed with branch pipe connecting tubular projections 4 around the respective holes 3. The branch pipes 5 are fitted, each at its one end, to the respective tubular projections 4 and brazed thereto.

A throttle body mount 6 of cast aluminum is brazed to the open end of the main pipe 2. An unillustrated throttle body is attached to the mount 6 and connected to an air supply tube from an air cleaner. The other ends of the branch pipes 5 are collectively brazed to a cylinder head connector 7 of cast aluminum, by which the branch pipes 5 are connected to the cylinder heads of an unillustrated engine. The main pipe 2 and the branch pipes 5 are preferably made of an aluminum material of JIS A6000 series, such as JIS A6063 or JIS A6061.

The throttle body mount 6 is in the form of a hollow cylinder which is open at both ends and is integral with an outward flange 8 at its one end. The main pipe 2 is brazed at its open end to the mount 6 and internally in communication with the interior of the mount. The inside diameter of the mount 6 is approximately equal to that of the main pipe 2. The connector 7 is in the form of a laterally elongated rectangle, has four holes (not shown) and is integrally formed with branch pipe connecting tubular projections 10 around the respective holes. A socket portion 11 for a fuel injector is provided above each projection 10 integrally therewith. The branch pipes 5 are fitted in and brazed to the respective projections 10. Preferably, the throttle body mount 6 and the connector 7 are made of an alloy comprising, for example, 0.50 to 0.65 wt. % of Mg, 0.40 to 0.6 wt. % of Cr, 5.0 to 6.5 wt. % of Zn, 0.15 to 0.25 wt. % of Ti and the balance Al and inevitable impurities.

The intake manifold 1 is fabricated by positioning the main pipe 2 and the connector 7 horizontally to direct the tubular projections 4, 10 vertically upward, and joining the main pipe 2 to the branch pipes 5 and to the throttle body mount 6 and joining the branch pipes 5 to the connector 7 at the same time by brazing. The main pipe 2 is brazed to the mount 6 by the method of the present invention.

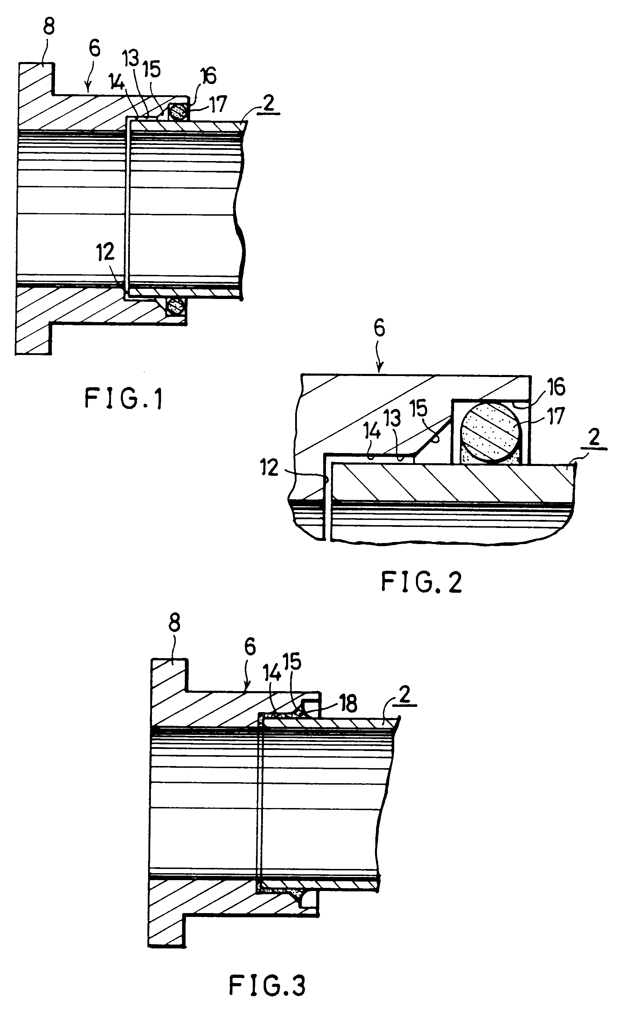

For the fabrication of the intake manifold, the main pipe 2 is brazed to the throttle body mount 6 by the method to be described below with reference to FIGS. 1 to 3.

The components prepared are a main pipe 2 made, for example, of wrought aluminum of JIS A6063, and a throttle body mount 6 cast, for example, of an alloy comprising 0.50 wt. % of Mg, 0.50 wt. % of Cr, 5.0 wt. % of Zn, 0.20 wt. % of Ti and the balance Al and inevitable impurities. A step 12 is formed in the inner periphery of the mount 6 at the end portion (on the right-hand side of FIGS. 1 to 3) for the main pipe 2 to be inserted in to provide a large-diameter portion serving as a main pipe socket bore 13. The socket bore 13 has, as arranged from inside axially outward (from left toward right in FIGS. 1 to 3), a straight portion 14 extending from the step 12 and having a diameter slightly larger than the outside diameter of the main pipe 2, a tapered portion 15 extending from the axially outer end of the straight portion 14 and flaring axially outward, and a brazing material placing portion 16 of circular cross section extending from the axially outer end of the tapered portion 15 and diametrically slightly larger than the largest portion of the tapered portion 15. An annular brazing material 17 circular in cross section and made, for example, of JIS A4343 is placed into the portion 16. The open end of the main pipe 2 is inserted into the straight portion 14 of the socket bore 13 in the mount 6 through the placing portion 16 and the tapered portion 15. The clearance between the outer surface of the main pipe 2 and the inner surface of the mount 6 defining the straight portion 14 is preferably about 0.1 mm. The clearance between the outer surface of the main pipe 2 and the mount inner surface defining the placing portion 16 is preferably about 2 mm. The axial length of the tapered portion 15 is preferably about 2 mm.

At the same time, one end of each branch pipe is inserted into the tubular projection 4, and the other end thereof into the tubular projection 10 of the connector 7, and a brazing material is provided between the main pipe projection 4 and the branch pipe 5 and between the connector projection 10 and the branch pipe 5. The assembly of main pipe 2, branch pipes 5, mount 6 and connector 7 is then placed into a furnace, with the main pipe 2 positioned horizontally in its entirety to direct the tubular projections 4, 10 vertically upward, and heated in a nitrogen gas atmosphere or in a vacuum within the furnace, for example, at 605° C for 3 minutes with use of a chlorine flux to thereby collectively join the main pipe projections 4 to the respective branch pipes 5, the main pipe 2 to the mount 6 and the branch pipes 5 to the respective connector projections 10 by brazing.

During the brazing operation, the brazing material provided in the placing portion 10 of the bore 13 in the mount 6 melts, and the molten brazing material flows axially inward as if it is drawn into the tapered portion 15 of the mount bore 13 around the main pipe portion positioned within the tapered portion 15, and further flows into and is retained in the straight portion 14 of the mount bore 13 around the main pipe portion positioned within the straight portion 14, whereby the molten brazing material is prevented from flowing down. As shown in FIG. 3, therefore, a fillet 18 which is uniformly sized over the entire circumference without any break is formed in the straight portion 14 and the tapered portion 15 of the mount bore 13 around the main portion present in these portions 14, 15, hence a satisfactory joint. The fillet 18 is formed also between the end face of the main pipe 2 and the step 12 substantially uniformly over the entire circumference.

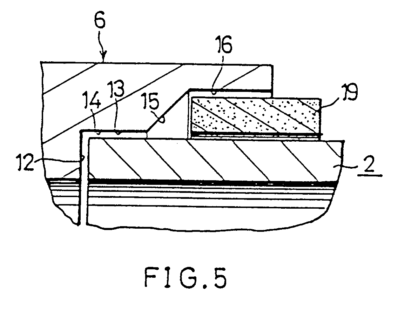

FIG. 5 shows a second embodiment of the present invention, in which a brazing material placing portion 16 has a slightly larger axial length than in the first embodiment. The diameter of the portion 16 at its axially inner end is equal to that of the axially outer end of a tapered portion 15. An annular brazing member 1 provided in the placing portion 16 has an axially elongated rectangular cross section and partly projecting outward from the portion 16.

Although the annular brazing materials of the foregoing embodiments are circular or rectangular in cross section, the material is not limited to such a form. The method of the invention is employed for brazing the main pipe of wrought aluminum serving as the plenum chamber of an intake manifold for motor vehicles to the throttle body mount of cast aluminum thereof according to the foregoing two embodiments. The present method can be used also for brazing components of other articles such as heat exchangers.

## Claims

1. A method of brazing a first metal member (2) at an end portion thereof having a predetermined length to a second metal member (6), with the end portion of the first metal member (2) inserted into an outwardly flaring bore (13) of the second metal member (6), the first metal member (2) being in a position between a horizontal position and a position inclined at an angle of less than 45 degrees with a horizontal plane, the method being **characterized** in that the bore (13) of the second metal member (6) has a straight portion (14), the flaring portion (15) extending from the axially outer end of the straight portion (14), the two metal members (2,6) being joined together by brazing with the end portion of the first metal member (2) inserted into the bore straight portion (14) of the second metal member (6) through the flaring portion (15), the bore of the second metal member (6) having a brazing material placing portion (16) extending from the axially outer end of the flaring portion (15) and being not smaller than the largest part of the flaring portion (15), and the brazing material (17) being disposed in the placing portion (16).

2. A method as defined in claim 1, **characterized** in that the first metal member (2) and the second metal member (6) are made of aluminum.

3. A method as defined in claim 1 or 2, **characterized** in that the first metal member (2) is a tubular plenum chamber made of wrought aluminum for an intake manifold, opened at the end portion and closed at the other end, and the second metal member (6) is a tubular throttle mount of cast aluminum for the intake manifold.

## Patentansprüche

1. Verfahren zum Hartlöten eines ersten Metallteils (2) an einem Endbereich vorgegebener Länge an ein zweites Metallteil (6), wobei der Endbereich des ersten Metallteils (2) in eine nach außen auseinanderlaufende Bohrung (13) des zweiten Metallteils (6) eingefügt ist, wobei das erste Metallteil (2) in einer Position zwischen einer waagerechten Position und einer in einem Winkel von weniger als 45° gegen eine waagerechte Ebene geneigten Position liegt, dadurch **gekennzeichnet**, daß die Bohrung (13) des zweiten Metallteils (6) einen geraden Abschnitt (14) aufweist, daß der auseinanderlaufende Abschnitt (15) vom axial äußeren Ende des geraden Abschnitts verläuft, daß die beiden Metallteile (2,6) durch Hartlöten verbunden werden, während der Endbereich des ersten Metallteils (2) in den geraden Abschnitt (14) der Bohrung des zweiten Metallteils (6) durch den auseinanderlaufenden Abschnitt (15) hindurch eingefügt ist, wobei die Bohrung des zweiten Metallteils (6) einen Anordnungsbereich (16) für Lötmaterial aufweist, der sich vom axial äußeren Ende des auseinanderlaufenden Bereichs (15) erstreckt und nicht kleiner als der größte Teil des auseinanderlaufenden Bereichs (15) ist, wobei das Lötmaterial (17) in dem Anordnungsbereich (16) angeordnet wird.

2. Verfahren nach Anspruch 6, dadurch **gekennzeichnet**, daß das erste Metallteil (2) und das zweite Metallteil (6) aus Aluminium bestehen.

3. Verfahren nach Anspruch 1 oder 2, dadurch **gekennzeichnet**, daß das erste Metallteil (2) eine rohrförmige Hauptkammer aus verformtem Aluminium für einen Ansaugkrümmer ist, die an einem Endbereich offen und am anderen Ende geschlossen ist, und daß das zweite Metallteil (6) eine rohrförmige Drosselklappen-Montageeinrichtung aus gegossenem Aluminium für den Ansaugkrümmer ist.

## Revendications

1. Procédé pour braser un premier élément métallique (2), au niveau de sa partie d'extrémité ayant une longueur prédéterminée, sur un second élément métallique (6), la partie d'extrémité du premier élément métallique (2) étant insérée dans un alésage (13) évasé vers l'extérieur, du second élément métallique (6), le premier élément métallique (2) étant situé dans une position comprise entre une position horizontale et une position inclinée suivant un angle inférieur à 45° par rapport à un plan horizontal, le procédé étant caractérisé en ce que l'alésage (13) du second élément métallique (6) présente une partie rectiligne (14), la partie évasée (15) s'étendant depuis l'extrémité axialement extérieure de la partie rectiligne (14), les deux éléments métalliques (2, 6) étant reliés entre eux par brasage et la partie d'extrémité du premier élément métallique (2) étant insérée dans la partie rectiligne (14) de l'alésage du second élément métallique, en passant à travers la partie évasée (15), l'alésage du second élément métallique (6) présentant une partie de positionnement de matériau de brasage (16) s'étendant depuis l'extrémité axialement extérieure de la partie évasée (15) et n'étant pas plus petite que la partie la plus grande de la partie évasée (15), et le matériau de brasage (17) étant disposé dans la partie de positionnement (16).

2. Procédé selon la revendication 1, caractérisé en ce que le premier élément métallique (2) et le second élément métallique (6) sont réalisés en aluminium.

3. Procédé selon la revendication 1 ou 2, caractérisé en ce que le premier élément métallique (2) est une chambre d'air d'aspiration tubulaire réalisée en aluminium corroyé pour un collecteur d'admission, ouverte au niveau de l'une de ses parties d'extrémité et fermée au niveau de son autre extrémité, et le second élément métallique (6) est un organe de montage tubulaire de papillon d'arrivée en aluminium coulé pour le collecteur d'admission.
